## Europäisches Patentamt
## European Patent Office
## Office européen des brevets

(19)

(11) Veröffentlichungsnummer : **0 018 467**
**B1**

(12) **EUROPÄISCHE PATENTSCHRIFT**

(45) Veröffentlichungstag der Patentschrift :
20.04.83

(51) Int. Cl.³ : **G 01 F 23/26**

(21) Anmeldenummer : **80100522.4**

(22) Anmeldetag : **02.02.80**

(54) Einrichtung zur elektrischen Messung des Flüssigkeitsinhaltes eines Vorratsbehälters.

(30) Priorität : **27.04.79 DE 2917053**

(43) Veröffentlichungstag der Anmeldung :
**12.11.80 Patentblatt 80/23**

(45) Bekanntmachung des Hinweises auf die Patenterteilung : **20.04.83 Patentblatt 83/16**

(84) Benannte Vertragsstaaten :
**DE FR GB IT**

(56) Entgegenhaltungen :
FR A 938 646
FR A 1 119 868
FR A 2 223 622
GB A 603 217
GB A 2 028 515
US A 3 958 159

(73) Patentinhaber : **VDO Adolf Schindling AG**
**Gräfstrasse 103**
**D-6000 Frankfurt/Main (DE)**

(72) Erfinder : **Jung, Wilhelm**
**Wetzlarer Strasse 72**
**D-6300 Giessen-Kleinlinden (DE)**

(74) Vertreter : **Könekamp, Herbert, Dipl.-Ing.**
**Sodener Strasse 9**
**D-6231 Schwalbach (DE)**

Jouve, 18, rue St-Denis, 75001 Paris, France

Einrichtung zur elektrischen Messung des Flüssigkeitsinhalts eines Vorratsbehälters

Die Erfindung betrifft eine Einrichtung zur elektrischen Messung des Flüssigkeitsinhalts eines Vorratsbehälters mit Elektroden, die auf einem zwischen dem Behälterboden und dem Behälterdeckel federelastisch einspannbaren Träger angebracht sind und vom minimal zu messenden bis zum maximal zu messenden Flüssigkeitsstand reichen, insbesondere zur kapazitiven Messung des Tankinhalts von Kraftfahrzeugen.

Eine derartige aus der FR-A 2 223 622 bekannte Einrichtung besteht aus zwei rohrförmigen, koaxial zueinander angeordneten Elektroden. Im Bodenbereich des Behälters sind diese Elektroden teleskopartig verlängerbar. Durch eine solche teleskopartige Veränderung der Länge der Elektroden ändert sich aber auch die Länge des Meßbereichs. Dies ist z. B. der Fall, wenn die Wandung des Behälters relativ dünn ist und sich bei gefülltem Behälter durch das Gewicht der Flüssigkeit durchwölbt. Da die Längenänderung der Elektroden aber nur im Bodenbereich erfolgt, sind die erfaßten Meßwerte insbesondere auch bei niedrigem Füllstand mit einem nicht erfaßbaren veränderlichen Fehler behaftet und damit die an der Anzeige ablesbaren Werte nicht korrekt.

Es ist daher Aufgabe der Erfindung, eine Einrichtung nach dem Oberbegriff zu schaffen, die über den gesamten Meßbereich insbesondere auch für die Restmenge zuverlässig arbeitet.

Diese Aufgabe wird erfindungsgemäß dadurch gelöst, daß der Träger über seine Länge gleichmäßig sich federelastisch wölbend ausgebildet ist. Damit passen sich sowohl der Träger als auch die Elektroden selbsttätig dem jeweils vorhandenen Abstand zwischen Behälterboden und Behälterdeckel an und zwar derart, daß jede Stelle entlang der Länge der Elektroden proportional im gleichen Abstand zu Behälterboden und Behälterdeckel verbleibt. Auf diese Weise wird immer der korrekte Behälterinhalt an der Anzeige angezeigt. Dies auch im kritischen Bodenbereich, wenn nur noch ein geringer Füllstand vorhanden ist.

In einer vorteilhaften z. B. aus billigem Kunststoff herstellbaren Ausgestaltung der Erfindung ist der Träger schraubenlinienartig ausgebildet, um eine große Elektrodenoberfläche und gute Elastizitätseigenschaften zu haben.

In einer weiteren vorteilhaften Ausbildung der Erfindung kann der Träger ein Stab sein, der im Einbauzustand unter seiner Vorspannung von einer geraden Achse abweichend bogenförmig verformt ist.

Zur Erleichterung der Montage der genannten Ausführungsformen, kann der Träger mindestens mit einem Ende in eine Raststelle des Vorratsbehälters einrastbar sein.

Um die elektrischen Zuleitungen zu den Elektroden leicht montieren zu können, kann der Träger mit einem Ende am Verschluß des Vorratsbehälters befestigt sein.

Ausführungsbeispiele der Erfindung sind in der Zeichnung dargestellt und werden im folgenden näher beschrieben. Es zeigen

Figur 1 einen Vorratsbehälter für Kraftstoff im Querschnitt mit im Verschluß befestigtem durch Verbiegung eingespanntem Träger ;

Figur 2 einen Vorratsbehälter für Kraftstoff im Querschnitt mit einem zwischen Deckel und Boden s-förmig eingespannten Träger ;

Figur 3 einen Vorratsbehälter für Kraftstoff im Querschnitt mit einem schraubenlinienartig ausgebildeten Träger.

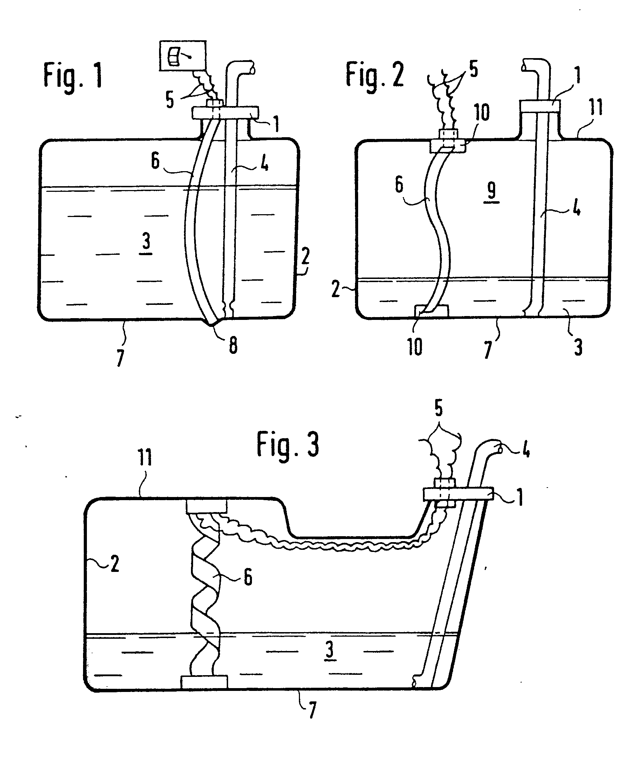

Der Verschluß 1 des Vorratsbehälters 2, der in Figur 1 dargestellt ist, hat außer der Durchführung zur Entnahme des Flüssigkeitsinhalts 3 mit Hilfe eines Rohres 4 noch Durchführungen für die elektrischen Leitungen 5 der Elektroden des als Stab ausgebildeten Trägers 6. Die bogenförmige einfach oder mehrfach s-förmige Wölbung des aus Isolierstoff bestehenden Trägers 6 kann erst bei Montage im Vorratsbehälter 2 entstehen. Die Formveränderung des Trägers 6 ist wegen der gleichmäßig verteilten Elastizität des Basismaterials dazu geeignet, im gesamten Meßbereich etwa lineare Werte zu liefern, insbesondere auch im Endbereich.

Zur besseren Fixierung des Trägers 6 hat der Boden 7 des Vorratsbehälters 2 eine Raststelle 8. Vorhandene Rastmulden können dabei mitbenutzt werden. Schließlich kann sich eine solche Rastmulde erst bei Montage bei weichelastischen Vorratsbehältern bilden. Der Träger 6 ist also außer an der Befestigung im Verschluß 1 auch am Boden 7 eindeutig festgelegt.

Der in Figur 2 dargestellte ebenfalls als Stab ausgebildete Träger 6 ist s-förmig gebogen und mit Klötzen 10 an der Decke 11 und dem Boden 7 des Vorratsbehälters 2 befestigt. Für Behälter aus Eisen eignen sich dabei besonders magnetische Klötze 10, die die Einspannstellen des Trägers 6 besser festlegen. Ein derartiger Klotz 10 kann außerdem zur Durchführung der elektrischen Leitungen 5 für die Elektroden dienen.

Es hat sich herausgestellt, daß zur eindeutigen Festlegung solcher Träger 6 eine Spannkraft von mindestens 1 Pond bei kleinen Behältern ausreichen kann. Je nach Größe des Behälters und Länge des Trägers 6 muß die Spannkraft gegebenenfalls erhöht werden, insbesondere dann, wenn sie zur Erzeugung einer Rastmulde dienen soll.

Eine besonders gleichmäßige Verspannung hat der in Figur 3 dargestellte schraubenlinienartige Träger 6 der Elektroden, die innerhalb des Vorratsbehälters 2 bis zur Ausflußöffnung verlegt sind. Im Vergleich zu den einseitig durchbogenen Stäben sind schraubenlinienartige Träger 6 für Elektroden noch gleichmäßiger verspannbar, und zwar auch an schwer zugänglichen von der Einfüllöffnung entfernten Stellen.

**Ansprüche**

1. Einrichtung zur elektrischen Messung des Flüssigkeitsinhalts eines Vorratsbehälters mit Elektroden, die auf einem zwischen dem Behälterboden und dem Behälterdeckel federelastisch einspannbaren Träger angebracht sind und vom minimal zu messenden bis zum maximal zu messenden Flüssigkeitsstand reichen, insbesondere zur kapazitiven Messung des Tankinhalts von Kraftfahrzeugen, dadurch gekennzeichnet, daß der Träger (6) über seine Länge gleichmäßig sich federelastisch wölbend ausgebildet ist.

2. Einrichtung nach Anspruch 1, dadurch gekennzeichnet, daß der Träger (6) schraubenlinienartig ausgebildet ist.

3. Einrichtung nach Anspruch 1, dadurch gekennzeichnet, daß der Träger ein Stab ist, der im Einbauzustand unter seiner Vorspannung von einer geraden Achse abweichend bogenförmig verformt ist.

4. Einrichtung nach einem der vorhergehenden Ansprüche, dadurch gekennzeichnet, daß der Träger (6) mindestens mit einem Ende in eine Raststelle (8) des Vorratsbehälters (2) einrastbar ist.

5. Einrichtung nach einem der vorhergehenden Ansprüche, dadurch gekennzeichnet, daß der Träger (6) mit einem Ende am Verschluß (1) des Vorratsbehälters (2) befestigt ist.

**Claims**

1. Device for measuring electrically the liquid content in a supply vessel by means of electrodes which are attached to a support clampable resiliently between the vessel bottom and the vessel cover and which extend from the minimum liquid level to be measured to the maximum liquid level to be measured, especially for the capacitive measurement of the tank content of motor vehicles, characterised in that the support (6) is designed to curve resiliently uniformly over its length.

2. Device according to Claim 1, characterised in that the support (6) is designed to resemble a helix.

3. Device according to Claim 1, characterised in that the support is a bar which, when installed, is deformed under its prestress arcuately away from a straight axis.

4. Device according to one of the preceding Claims, characterised in that the support (6) can engage at least with one end into an engagement point (8) of the supply vessel (2).

5. Device according to one of the preceding Claims, characterised in that the support (6) is fastened with one end to the closure (1) of the supply vessel (2).

**Revendications**

1. Dispositif pour mesurer, par voie électrique, le volume de liquide contenu dans un réservoir, au moyen d'électrodes qui sont montées sur un support élastique souple pouvant être tendu entre le fond et le couvercle dudit réservoir et qui s'étendent du niveau minimal au niveau maximal de liquide à mesurer, en particulier, pour des mesures capacitives du contenu du réservoir des véhicules automobiles, dispositif caractérisé en ce que le support (6) est formé de manière à pouvoir s'incurver régulièrement sur toute sa longueur du fait de sa souplesse élastique.

2. Dispositif selon la revendication 1, caractérisé en ce que le support (6) a une forme hélicoïdale.

3. Dispositif selon la revendication 1, caractérisé en ce que le support est une tige, à l'axe rectiligne de laquelle a été imposée, au montage, une déformation lui conférant une forme arquée.

4. Dispositif selon l'une quelconque des revendications précédentes, caractérisé en ce que l'une, au moins, des extrémités du support (6) peut s'engager dans un point d'appui (8) du réservoir (2).

5. Dispositif selon l'une quelconque des revendications précédentes, caractérisé en ce que l'une des extrémités du support (6) est fixée au bouchon (1) du réservoir (2).

Fig. 1

Fig. 2

5

1

6

4

3

2

7

8

5

10

1

11

6

9

4

2

10

7

3

5

Fig. 3

11

4

2

6

1

3

7